# EUROPEAN PATENT SPECIFICATION

(11) **EP 3 450 296 B1**
(45) Date of publication and mention of the grant of the patent: **22.07.2020**
(21) Application number: 18172347.9
(22) Date of filing: 15.05.2018
(51) Int. Cl.: B62M 7/00, B62H 1/02, B62J 99/00, B62K 21/00

(54) **ELECTRIC MOTORCYCLE**
ELEKTRISCHES MOTORRAD
MOTOCYCLETTE ÉLECTRIQUE

(30) Priority: 31.08.2017 JP 2017166919
(43) Date of publication of application: 06.03.2019
(73) Proprietor: Yamaha Hatsudoki Kabushiki Kaisha, Iwata-shi Shizuoka 438-8501 (JP)
(72) Inventor: YAMASAKI, Ryosuke, Iwata-shi, Shizuoka 438-8501 (JP); KOBA, Ichiro, Iwata-shi, Shizuoka 438-8501 (JP); MUROTA, Naoki, Iwata-shi, Shizuoka 438-8501 (JP); MOCHIZUKI, Toshiki, Iwata-shi, Shizuoka 438-8501 (JP); ORIMO, Toshiro, Iwata-shi, Shizuoka 438-8501 (JP); FUJIWARA, Asaki, Iwata-shi, Shizuoka 438-0026 (JP); MURAMATSU, Yasuyuki, Iwata-shi, Shizuoka 438-8501 (JP); NAKAI, Kazuhiko, Iwata-shi, Shizuoka 438-8501 (JP); KURAKAKE, Haruhito, Iwata-shi, Shizuoka 438-8501 (JP)
(74) Representative: Grünecker Patent- und Rechtsanwälte PartG mbB

(56) References cited:
- EP-A1- 2 423 087
- EP-A1- 2 796 352
- EP-A1- 2 799 320
- EP-A1- 2 957 490
- EP-A2- 2 236 403
- JP-A- 2012 176 695
- US-A1- 2015 314 692

## Description

The present invention relates to an electric motorcycle according to the preamble of independent claim 1. Such an electric motorcycle can be taken from the prior art document EP 2 796 352 A1.

In the specification of Japanese Patent No. 6006334, there is disclosed an electric motorcycle in which a charging inlet is provided on a left wall of an upper cover provided between a handle and a seat.

Incidentally, in the related-art electric motorcycle described above, when a power supply plug is inserted in a rightward direction into the charging inlet provided on a left side of a vehicle body under a state in which a side stand provided on the left side of the vehicle body supports the vehicle body, it may be difficult to ensure stability of a posture of the vehicle body.

The present invention has been made in view of the above-mentioned problem, and has an object to provide an electric motorcycle capable of ensuring stability of a posture of a vehicle body when a power supply plug is inserted into a charging inlet. According to the present invention said object is solved by an electric motorcycle having the features of independent claim 1. Preferred embodiments are laid down in the dependent claims.
(1) As an electric motorcycle proposed in the present disclosure, there is provided an electric motorcycle that includes a front wheel; a rear wheel; an electric motor, which is configured to drive at least one of the front wheel and the rear wheel; a battery, which is configured to store electric power to be supplied to the electric motor; a side stand, which is positioned on a first side with respect to a center of a vehicle body in a vehicle width direction; a steering handle; a seat for allowing a driver to sit thereon in a straddling manner; an exterior cover, which is provided between the steering handle and the seat; and
   a charging inlet, which is electrically connected to the battery, and has an insertion port into which a power supply plug is to be inserted, the insertion port being arranged in a portion of the exterior cover on a second side that is opposite, with respect to the center of the vehicle body in the vehicle width direction, to the first side. With this configuration, it is possible to ensure stability of a posture of the vehicle body when the power supply plug is inserted into the charging inlet.
(2) In an example of the electric motorcycle, an extension line of a direction of inserting the power supply plug into the charging inlet, which is given when the side stand supports the vehicle body, passes a region within a triangle formed by connecting a ground contact point of the front wheel, a ground contact point of the rear wheel, and a ground contact point of the side stand. With this configuration, it is possible to ensure further stability of the posture of the vehicle body when the power supply plug is inserted into the charging inlet.
(3) In an example of the electric motorcycle, when the side stand supports the vehicle body, the insertion port of the charging inlet is directed in an upward direction with respect to a horizontal direction.
   With this configuration, the power supply plug is easily inserted under a state in which the side stand supports the vehicle body.
(4) In an example of the electric motorcycle, the charging inlet is arranged in a portion of the exterior cover that is directed in an upward direction and a second direction directed from the center of the vehicle body in the vehicle width direction toward the second side. With this configuration, the power supply plug is easily inserted under the state in which the side stand supports the vehicle body.
(5) In an example of the electric motorcycle, the battery is arranged inside the exterior cover.
   With this configuration, the exterior cover can be used to accommodate the battery.
(6) Further, the battery includes a first battery cell, and a second battery cell that is arranged, with respect to the first battery cell, in the second direction directed from the center of the vehicle body in the vehicle width direction toward the second side, and is arranged so that an upper surface of the second battery cell is lower than an upper surface of the first battery cell, and wherein at least a part of the charging inlet is arranged in a space formed above the second battery cell and in the second direction with respect to the first battery cell. With this configuration, the charging inlet can be arranged using the space formed by the two battery cells.
(7) In an example of the electric motorcycle, further including an inlet lid capable of opening and closing the charging inlet.
   With this configuration, the charging inlet can be opened and closed.
(8) in an example of the electric motorcycle, the charging inlet is arranged in the exterior cover at a position at which insertion and removal of the power supply plug is disabled when the steering handle is at a center position, and at which insertion and removal of the power supply plug is enabled when the steering handle is turned by a predetermined angle or more from the center position in a first direction directed from the center of the vehicle body in the vehicle width direction toward the first side. With this configuration, the vehicle can be prevented from being moved when the power supply plug remains inserted in the charging inlet.

According to the present teaching, it is possible to ensure the stability of the posture of the vehicle body when the power supply plug is inserted into the charging inlet.

### BRIEF DESCRIPTION OF THE DRAWINGS

FIG. 1 is a left side view for illustrating an electric motorcycle according to a preferred embodiment.
FIG. 2 is a plan view for illustrating the electric motorcycle.
FIG. 3 is a front view for illustrating the electric motorcycle.
FIG. 4 is a sectional view taken along the line IV-IV of FIG. 1.
FIG. 5 is a plan view for illustrating an electric motorcycle according to a non-claimed embodiment.
FIG. 6A is a view for illustrating another arrangement example of a charging inlet.
FIG. 6B is a view for illustrating the arrangement example of FIG. 6A when seen from a lateral side of the charging inlet.
FIG. 7A is a view for illustrating still another non-claimed arrangement example of the charging inlet.
FIG. 7B is a view for illustrating the non-claimed arrangement example of FIG. 7A when seen from the lateral side.
FIG. 8A is a view for illustrating still another non-claimed arrangement example of the charging inlet.
FIG. 8B is a view for illustrating the non-claimed arrangement example of FIG. 8A when seen from the lateral side.
FIG. 9 is a view for illustrating still another non-claimed arrangement example of the charging inlet.
FIG. 10 is a view for illustrating still another non-claimed arrangement example of the charging inlet.
FIG. 11 is a view for illustrating still another non-claimed arrangement example of the charging inlet.

### DETAILED DESCRIPTION OF THE PREFERRED EMBODIMENT

A preferred embodiment is described with reference to the drawings.

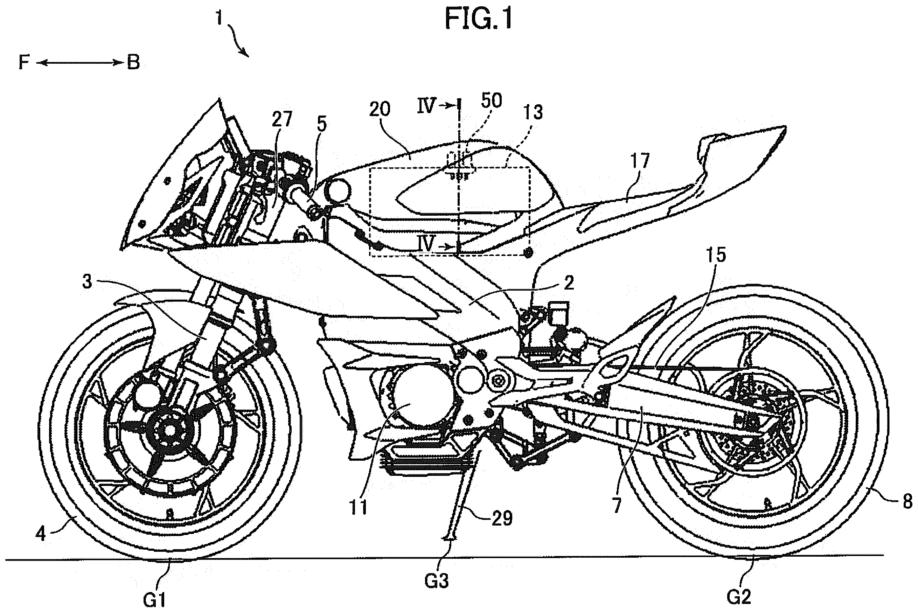

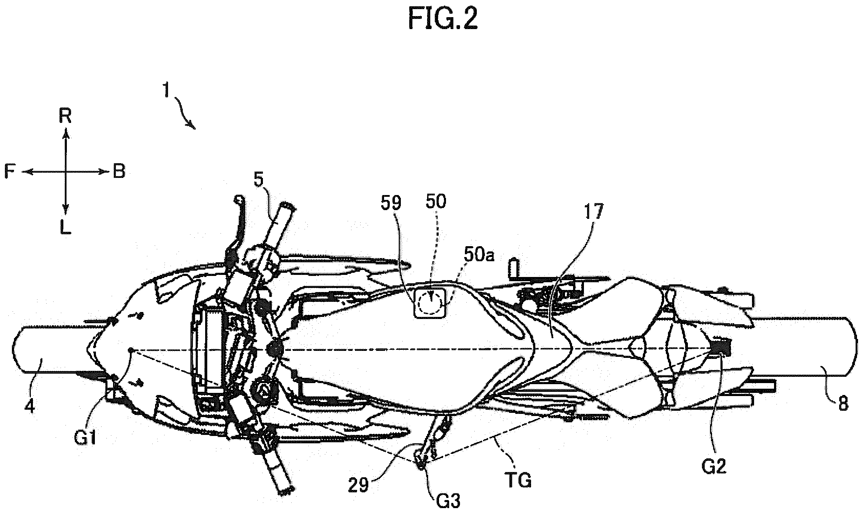

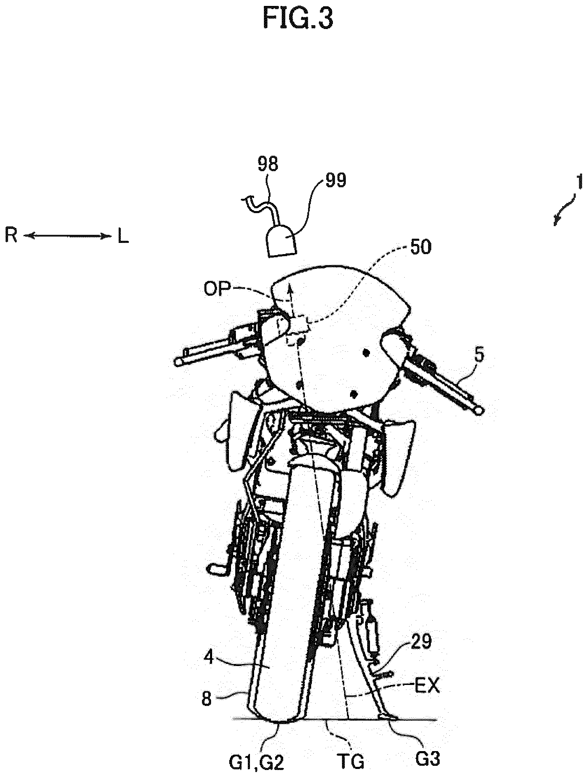

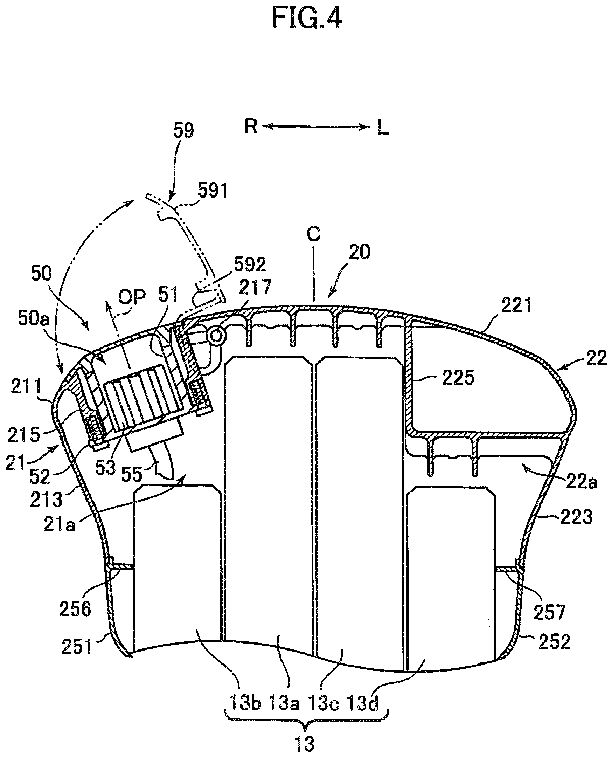

FIG. 1, FIG. 2, and FIG. 3 are a left side view, a plan view, and a front view for illustrating an electric motorcycle 1, respectively. Of those drawings, FIG. 1 and FIG. 2 are illustrations of a state in which a vehicle body stands upright, and FIG. 3 is an illustration of a state in which the vehicle body is supported by a side stand 29 and inclined. FIG. 4 is a sectional view taken along the line IV-IV of FIG. 1.

The arrows F, B, L, and R in the drawings indicate a forward direction, a rearward direction, a leftward direction, and a rightward direction from the electric motorcycle 1, respectively. In the present application, the forward direction, the rearward direction, the leftward direction, and the rightward direction respectively correspond to a forward direction, a rearward direction, a leftward direction, and a rightward direction when seen from a driver who sits on a seat 17 in a straddling manner while facing a steering handle 5. A right-and-left direction is referred to also as a vehicle width direction.

The electric motorcycle 1 includes a vehicle body frame 2. A front fork 3 is supported on a front end portion of the vehicle body frame 2 so as to be turnable in the right-and-left direction. A front wheel 4 is supported on a lower end portion of the front fork 3 so as to be rotatable. The steering handle 5 for steering is provided on an upper end portion of the front fork 3. A swingarm 7 is supported on a rear lower portion of the vehicle body frame 2 so as to be swingable in an up-and-down direction. A rear wheel 8 is supported on a rear end portion of the swingarm 7 so as to be rotatable. The seat 17 for allowing a driver to sit thereon in a straddling manner is provided on a rear upper portion of the vehicle body frame 2.

The electric motorcycle 1 includes an electric motor 11 which is configured to drive the rear wheel 8 serving as the driving wheel. The electric motor 11 is, for example, a three-phase AC motor. The electric motor 11 is supported on the vehicle body frame 2. Alternatively, the electric motor 11 may be provided on the swingarm 7, or provided on the rear wheel 8. A driving force of the electric motor 11 is transmitted to the rear wheel 8 through a transmission member 15 such as a chain. Alternatively, the electric motor 11 may drive the front wheel 4, or drive both of the front wheel 4 and the rear wheel 8.

The electric motorcycle 1 includes a battery 13 which is configured to store electric power to be supplied to the electric motor 11. The battery 13 is, for example, a lithium-ion battery. In the illustrated example, the battery 13 is arranged inside an exterior cover 20 which is provided between the steering handle 5 and the seat 17.

The exterior cover 20 has, for example, a dome-like shape. Inside the exterior cover 20, there is formed a battery accommodating space for accommodating the battery 13 therein. The exterior cover 20 is made of, for example, a synthetic resin material. The exterior cover 20 has, for example, a shape that resembles a fuel tank of an engine-driven motorcycle. For example, the exterior cover 20 is opened in the downward direction, and the battery accommodating space extends also in the downward direction from the exterior cover 20. Alternatively, the exterior cover 20 may define a closed battery accommodating space similarly to the fuel tank of the engine-driven motorcycle.

A charging inlet 50 is also arranged inside the exterior cover 20. The charging inlet 50 is electrically connected to the battery 13. During charging, a power supply plug 99 is inserted into the charging inlet 50. The power supply plug 99 is provided at a distal end of a cable 98 extending from an external power supply apparatus (not shown). Specific shape and position of the charging inlet 50 are described later.

The electric motorcycle 1 includes the side stand 29 configured to support the vehicle body during stop of the electric motorcycle 1. The side stand 29 is provided on a left side (an example of a first side) of the vehicle body. That is, the side stand 29 is arranged at a position apart in the leftward direction (an example of a first direction) from a center of the vehicle body in the vehicle width direction. The side stand 29 is turned about a shaft, which is provided on the vehicle body, between a standing position of being arranged so as to extend in the downward direction and a storage position of being arranged so as to extend in the rearward direction. When the side stand 29 is turned to the standing position, a lower end of the side stand 29 is brought into contact with the ground so that the side stand 29 supports the vehicle body. When the side stand 29 supports the vehicle body, the vehicle body is inclined in the leftward direction.

When the side stand 29 supports the vehicle body, three components, that is, the front wheel 4, the rear wheel 8, and the side stand 29 are held in contact with the ground. As illustrated in FIG. 2, a ground contact point G1 of the front wheel 4, a ground contact point G2 of the rear wheel 8, and a ground contact point G3 of the side stand 29 form a triangle TG. The triangle TG formed by the ground contact points G1 to G3 is positioned on the left side with respect to the center of the vehicle body in the vehicle width direction. In FIG. 2, for convenience of illustration, the ground contact point G3 is illustrated in the plan view for illustrating the state in which the vehicle body stands upright. However, when the side stand 29 actually supports the vehicle body, the ground contact point G3 is at a position further apart in the leftward direction from the position illustrated in FIG. 2.

The charging inlet 50 is arranged so that an insertion port 50a, into which the power supply plug 99 is to be inserted, is positioned on the right side (an example of a second side) of the exterior cover 20. That is, the insertion port 50a of the charging inlet 50 is arranged at a position apart in the rightward direction (an example of a second direction) from a center of the exterior cover 20 in the vehicle width direction of the vehicle body. In the illustrated example, the entire charging inlet 50 is arranged at the position apart in the rightward direction from the center of the vehicle body in the vehicle width direction. Alternatively, a part of the charging inlet 50 may be arranged at a position apart in the leftward direction from the center of the vehicle body in the vehicle width direction.

As illustrated in FIG. 4, the charging inlet 50 includes a tubular housing 51 made of an insulating resin material. An insertion hole, into which the power supply plug 99 (see FIG. 3) is to be inserted, is formed in an inside of the housing 51. A connection portion 53 including a plurality of terminals is provided inside the housing 51. The power supply plug 99 inserted into the housing 51 is connected to the connection portion 53.

The power supply plug 99 inserted in the housing 51 and connected to the connection portion 53 is electrically connected to the battery 13 through a cable 55. The battery 13 includes a plurality of battery cells 13a to 13d. The battery cells 13a to 13d are each formed into a rectangular parallelepiped shape, and are aligned inside the exterior cover 20 in the vehicle width direction.

A flange 52 is formed on the housing 51, and the flange 52 is fixed with screws to a boss portion 215 formed on the exterior cover 20. The boss portion 215 extends from an outer shell of the exterior cover 20 toward an inside of the exterior cover 20. The boss portion 215 is formed into a tubular shape, and surrounds the charging inlet 50.

The insertion port 50a of the charging inlet 50 is formed by an edge of the tubular housing 51. An opening direction OP of the insertion port 50a corresponds to, for example, an axial direction of the tubular housing 51. The insertion port 50a of the charging inlet 50 is positioned on the right side of the exterior cover 20, and hence is directed at least in the rightward direction when the vehicle body assumes an upright posture. In the illustrated example, the insertion port 50a is directed in a rightward and upward direction. Alternatively, the insertion port 50a may be directed in the rightward direction, or directed in a rightward and downward direction.

The exterior cover 20 includes an inlet lid 59 capable of opening and closing the charging inlet 50. The inlet lid 59 is supported so as to be turnable between an opening position and a closing position about a shaft portion 217 provided on a back surface side of the exterior cover 20. The inlet lid 59 includes a lid portion 591, and an arm portion 592 that extends from the lid portion 591 and is coupled to the shaft portion 217.

When the inlet lid 59 is at the closing position, the inlet lid 59 is at a position of covering the opening of the charging inlet 50, thereby restricting insertion of the power supply plug 99. When the inlet lid 59 is at the opening position, the inlet lid 59 is away from the opening of the charging inlet 50, thereby allowing insertion of the power supply plug 99.

When the inlet lid 59 is at the closing position, the inlet lid 59 is held in contact with an edge of the housing 51 of the charging inlet 50. Specifically, a back surface of the inlet lid 59 is held in contact with an entire periphery of the edge of the housing 51, and the inlet lid 59 closes an inner space of the housing 51. Further, an outer surface of the inlet lid 59 and an outer surface of the exterior cover 20 are formed so as to be flush with each other when the inlet lid 59 is at the closing position.

The line C of FIG. 4 indicates the center in the vehicle width direction. The exterior cover 20 includes a right section 21 and a left section 22. The right section 21 is positioned on the right side with respect to the center in the vehicle width direction and is directed mainly in the rightward direction. The left section 22 that is positioned on the left side with respect to the center in the vehicle width direction and is directed mainly in the leftward direction. The right section 21 forms the right side of the exterior cover 20, and the left section 22 forms the left side of the exterior cover 20. The charging inlet 50 is mounted to the right section 21 of the exterior cover 20.

More specifically, the right section 21 includes a right upper portion 211 directed in a rightward and upward direction, and a right lower portion 213 directed in a rightward direction or a rightward and downward direction. The left section 22 includes a left upper portion 221 directed in a leftward and upward direction, and a left lower portion 223 directed in a leftward direction or a leftward and downward direction. The charging inlet 50 is mounted to the right upper portion 211.

A side cover 251 configured to cover the right side of the vehicle body is arranged below the right section 21 of the exterior cover 20. A lower end portion of the right section 21 abuts against an upper end portion of the side cover 251. An outer surface of the right section 21 and an outer surface of the side cover 251 are formed so as to be flush with each other. Similarly, a side cover 252 configured to cover the left side of the vehicle body is arranged below the left section 22 of the exterior cover 20.

As illustrated in FIG. 3, the charging inlet 50 is arranged so that an extension line EX of a direction of inserting the power supply plug 99 into the charging inlet 50, which is given when the side stand 29 supports the vehicle body, passes a region within the triangle TG formed by connecting the ground contact point G1 of the front wheel 4, the ground contact point G2 of the rear wheel 8, and the ground contact point G3 of the side stand 29. The direction of inserting the power supply plug 99 is opposite to the opening direction OP of the charging inlet 50, and the extension line EX is an imaginary line extending from the charging inlet 50 in the direction of inserting the power supply plug 99.

Further, as illustrated in FIG. 3, the charging inlet 50 is arranged so that the opening direction OP of the charging inlet 50 is directed in the upward direction with respect to a horizontal direction when the side stand 29 supports the vehicle body. In the illustrated example, the opening direction OP is directed substantially in a vertical direction. The vehicle body is inclined in the leftward direction when the side stand 29 supports the vehicle body. Accordingly, when the side stand 29 supports the vehicle body, the opening direction OP of the charging inlet 50, which is directed in the rightward and upward direction when the vehicle body assumes the upright posture, is approximated to the upward direction.

Of the battery cells 13a to 13d accommodated inside the exterior cover 20, the first battery cell 13a is arranged on the right side with respect to the center in the vehicle width direction. The second battery cell 13b is arranged on the right side with respect to the first battery cell 13a. An upper surface of the second battery cell 13b is lower than an upper surface of the first battery cell 13a.

Further, the third battery cell 13c is arranged on the left side with respect to the center in the vehicle width direction. The first battery cell 13a and the third battery cell 13c are arranged on both sides of the center in the vehicle width direction, and upper surfaces of the first battery cell 13a and the third battery cell 13c have the same height. The fourth battery cell 13d is arranged on the left side with respect to the third battery cell 13c. An upper surface of the fourth battery cell 13d is lower than the upper surface of the third battery cell 13c, and has the same height as that of the upper surface of the second battery cell 13b.

As described above, the upper surfaces of the battery cells 13b and 13d arranged on the outer sides in the right-and-left direction are set lower than the upper surfaces of the battery cells 13a and 13c arranged on the inner sides in the right-and-left direction. With this configuration, the exterior cover 20 is easily formed into a dome-like shape. That is, the right upper portion 211 directed in the rightward and upward direction, and the left upper portion 221 directed in the leftward and upward direction are easily formed in the exterior cover 20.

At least a part of the charging inlet 50 is arranged in a space 21a formed on the right side of the first battery cell 13a and above the second battery cell 13b. That is, the charging inlet 50 is arranged using the space 21a formed by arranging the battery cells 13a and 13b so that the upper surface of the second battery cell 13b is lower than the upper surface of the first battery cell 13a.

The charging inlet 50 is mounted to a portion of the exterior cover 20 covering the space 21a. The exterior cover 20 covers a range from the upper side of the space 21a to the right side thereof. In the illustrated example, the charging inlet 50 is mounted in a right upper region of the space 21a. Alternatively, the charging inlet 50 may be mounted in an upper region of the space 21a, or may be mounted in a right region of the space 21a.

A support wall 225 configured to keep a posture of the third battery cell 13c is provided in a space 22a formed on the left side of the third battery cell 13c and above the fourth battery cell 13d. Further, protruding portions 256 and 257 are respectively formed on upper end portions of the right and left side covers 251 and 252 to extend inward in the right-and-left direction. The protruding portions 256 and 257 are configured to respectively keep postures of the battery cells 13b and 13d arranged on the outer sides in the right-and-left direction.

In the embodiment described above, the insertion port 50a of the charging inlet 50 is arranged on the right side of the exterior cover 20. With this configuration, the insertion port 50a is arranged on the opposite side of the side stand 29. Therefore, it is possible to ensure stability of a posture of the vehicle body when the power supply plug 99 is inserted into the charging inlet 50.

When the charging inlet 50 is arranged on the left side of the exterior cover 20, it is necessary to bring the external power supply apparatus close to the left side of the vehicle body during charging, and the cable 98 is arranged between the external power supply apparatus and the vehicle body. Accordingly, it may be difficult for a driver to get off the vehicle from the left side of the vehicle body. In contrast, when the charging inlet 50 is arranged on the right side of the exterior cover 20 as in this embodiment, a driver easily gets off the vehicle from the left side of the vehicle body.

Further, in this embodiment, as illustrated in FIG. 3, the extension line EX of the direction of inserting the power supply plug 99 into the charging inlet 50, which is given when the side stand 29 supports the vehicle body, passes the region within the triangle TG formed by connecting the ground contact point G1 of the front wheel 4, the ground contact point G2 of the rear wheel 8, and the ground contact point G3 of the side stand 29. With this configuration, it is possible to ensure further stability of the posture of the vehicle body when the power supply plug 99 is inserted into the charging inlet 50.

Further, in this embodiment, as illustrated in FIG. 3, when the side stand 29 supports the vehicle body, the opening direction OP of the charging inlet 50 is directed in the upward direction with respect to the horizontal direction. With this configuration, the power supply plug 99 is easily inserted into the charging inlet 50 under the state in which the side stand 29 supports the vehicle body.

Further, in this embodiment, as illustrated in FIG. 4, the charging inlet 50 is arranged in the right upper portion 211 of the exterior cover 20 directed in the rightward and upward direction. With this configuration, the power supply plug 99 is easily inserted into the charging inlet 50 under the state in which the side stand 29 supports the vehicle body.

Further, in this embodiment, as illustrated in FIG. 4, the battery 13 is arranged inside the exterior cover 20. With this configuration, the exterior cover 20 can be used to accommodate the battery 13. Further, in this embodiment, as illustrated in FIG. 4, the inlet lid 59 capable of opening and closing the charging inlet 50 is further provided. With this configuration, the charging inlet 50 can be opened and closed.

Further, in this embodiment, as illustrated in FIG. 4, at least the part of the charging inlet 50 is arranged in the space 21a formed on the right side of the first battery cell 13a and above the second battery cell 13b. With this configuration, the charging inlet 50 can be arranged using the space 21a formed by arranging the battery cells 13a and 13b so that the upper surface of the second battery cell 13b is lower than the upper surface of the first battery cell 13a.

Now, non-claimed reference examples are described. Components which are the same as those of the above-mentioned embodiment are denoted by the same reference symbols, and detailed description thereof is omitted.

### [First non-claimed Reference Example]

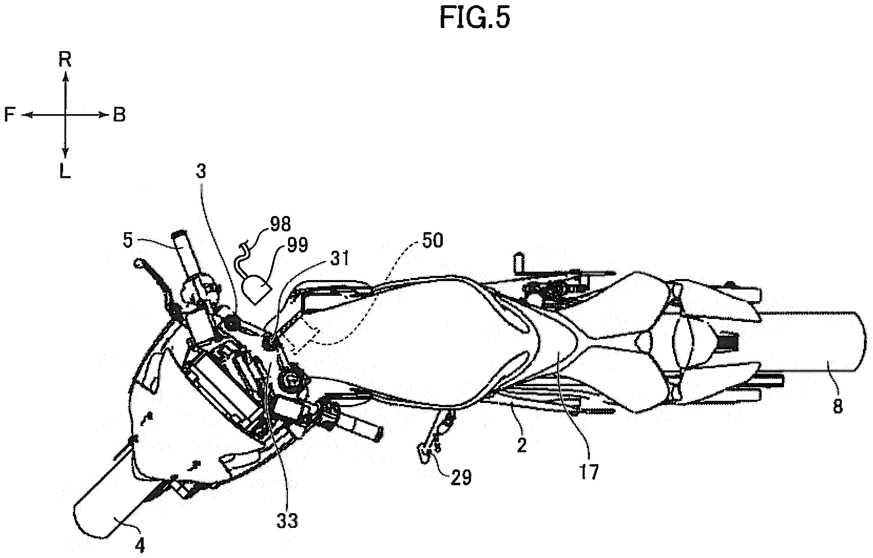

In a first non-claimed reference example illustrated in FIG. 5, the charging inlet 50 is arranged in a vicinity of a head pipe 27 (see FIG. 1) provided at a front end portion of the vehicle body frame 2. A steering shaft 31 is inserted into the head pipe 27, and is supported therein so as to be turnable. The front fork 3 is coupled to the steering shaft 31 through a bracket 33. The steering handle 5 is also fixed to the bracket 33. The steering handle 5 and the front fork 3 are turned together about the steering shaft 31.

The charging inlet 50 is arranged in the exterior cover 20 at a position at which insertion and removal of the power supply plug 99 is disabled when the steering handle 5 is at a center position (see FIG. 2), and at which insertion and removal of the power supply plug 99 is enabled when the steering handle 5 is turned by a predetermined angle or more from the center position. In the illustrated non-claimed example, when the steering handle 5 is turned in the leftward direction by the predetermined angle or more from the center position, insertion and removal of the power supply plug 99 is enabled.

Specifically, when the steering handle 5 is at the center position, the steering handle 5 or a member turned together with the steering handle 5 is at a position of covering the opening of the charging inlet 50, thereby disabling insertion of the power supply plug 99. When the steering handle 5 is turned by the predetermined angle or more, the steering handle 5 or the member turned together with the steering handle 5 is away from the opening of the charging inlet 50, thereby enabling insertion of the power supply plug 99. Examples of the member turned together with the steering handle 5 include the front fork 3 and the bracket 33.

Further, when the steering handle 5 is to be returned to the center position from a state in which the power supply plug 99 is inserted into the charging inlet 50 after the steering handle 5 is turned by the predetermined angle or more from the center position, the steering handle 5 or the member turned together with the steering handle 5 is brought into contact with the power supply plug 99 or the cable 98. Thus, the steering handle 5 is inhibited from being returned to the center position.

In the illustrated non-claimed example, the charging inlet 50 is arranged in a right front portion of the exterior cover 20. Alternatively, the charging inlet 50 may be arranged in a left front portion of the exterior cover 20. Further, in the illustrated non-claimed example, the charging inlet 50 is arranged inside the exterior cover 20. Alternatively, the charging inlet 50 may be fixed to the vehicle body frame 2 on the outer side of the exterior cover 20.

According to the first non-claimed reference example described above, in order to return the steering handle 5 to the center position, it is necessary to remove the power supply plug 99 from the charging inlet 50. Thus, the vehicle can be prevented from being moved when the power supply plug 99 remains inserted in the charging inlet 50.

### [Second non-claimed Reference Example]

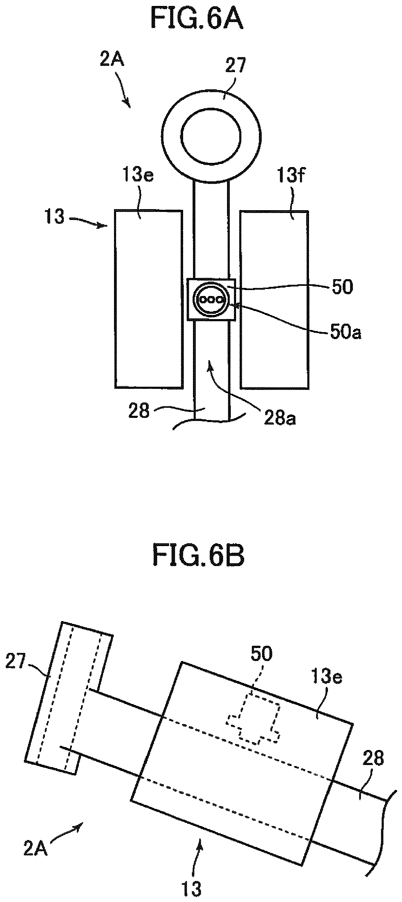

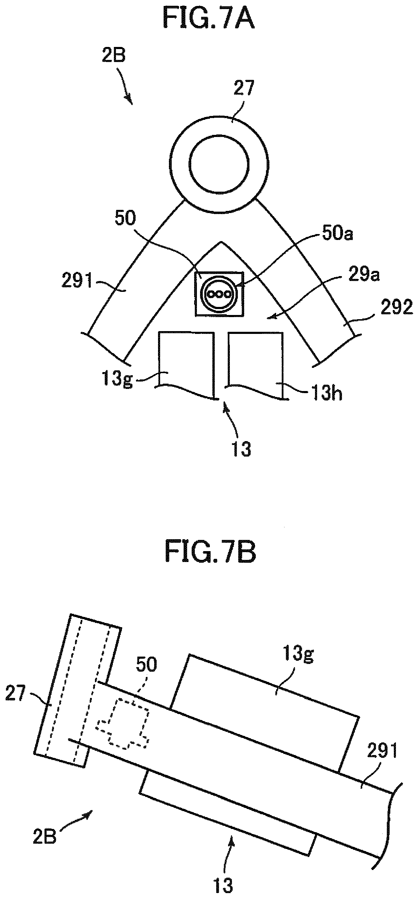

In a second non-claimed reference example illustrated in FIG. 6A to FIG. 7B, the charging inlet 50 is arranged using a space formed by the vehicle body frame 2 and the battery 13. FIG. 6A and FIG. 7A are plan views, and FIG. 6B and FIG. 7B are left side views. In those drawings, the vehicle body frame 2, the battery 13, and the charging inlet 50 are schematically illustrated.

In the non-claimed example illustrated in FIG. 6A and FIG. 6B, a vehicle body frame 2A includes the head pipe 27, and one main frame 28 extending rearward from the head pipe 27. A pair of battery cells 13e and 13f are arranged on sides of the main frame 28 in the right-and-left direction of the main frame 28. The charging inlet 50 is arranged in a space 28a formed between the pair of battery cells 13e and 13f and above the main frame 28.

In a non-claimed example illustrated in FIG. 7A and FIG. 7B, a vehicle body frame 2B includes the head pipe 27, and a pair of main frames 291 and 292 branching off in the right-and-left direction and extending rearward from the head pipe 27. The battery cells 13e and 13f are arranged between the pair of main frames 291 and 292. The charging inlet 50 is arranged in a space 29a, which is formed between the pair of main frames 291 and 292, and is positioned on the front side of the battery cells 13g and 13h.

According to the second non-claimed reference example described above, the charging inlet 50 is arranged in the space 28a or the space 29a formed by the vehicle body frame 2 and the battery 13. With this configuration, the space 28a or the space 29a described above can be effectively used. Further, the charging inlet 50 can be less conspicuous.

### [Third non-claimed Reference Example]

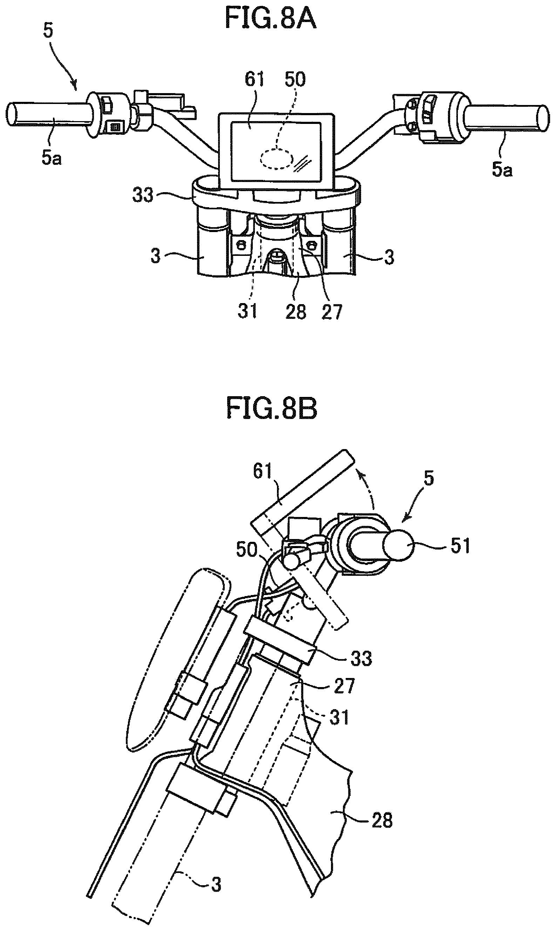

In a third non-claimed reference example illustrated in FIG. 8A and FIG. 8B, the charging inlet 50 is arranged below an indicator 61 of a movable type. The indicator 61 is, for example, an indication device configured to indicate a vehicle speed, a remaining battery level, and the like.

The indicator 61 is provided on a center portion of the steering handle 5. That is, the indicator 61 is positioned between grips 5a provided on right and left end portions of the steering handle 5, respectively. The indicator 61 is fixed to the steering handle 5 or the bracket 33, and is turned together with the steering handle 5. The charging inlet 50 is also fixed to the steering handle 5 or the bracket 33, and is turned together with the steering handle 5.

The indicator 61 is provided so as to be capable of opening and closing the charging inlet 50. For example, the indicator 61 is supported so as to be turnable about a front edge portion thereof between an opening position and a closing position. Alternatively, the indicator 61 may be configured to be slidable. When the indicator 61 is at the closing position, the indicator 61 can be visually recognized by a driver.

When the indicator 61 is at the closing position, the indication unit 61 is at a position of covering the opening of the charging inlet 50, thereby restricting insertion of the power supply plug 99. When the indicator 61 is at the opening position, the indicator 61 is away from the opening of the charging inlet 50, thereby allowing insertion of the power supply plug 99. The opening direction of the charging inlet 50 is directed rearward and upward.

When the indicator 61 is at the closing position, the indicator 61 is held in contact with an edge of the charging inlet 50. Specifically, a back surface of the indicator 61 is held in contact with an entire periphery of the edge of the charging inlet 50, and the indicator 61 closes an inner space of the charging inlet 50.

According to the third non-claimed reference example described above, the charging inlet 50 is provided at a position of the indicator 61. With this configuration, a driver easily recognizes that the power supply plug 99 is inserted in the charging inlet 50. In addition, it is necessary to remove the power supply plug 99 from the charging inlet 50 so as to allow a driver to see the indicator 61. Thus, the vehicle can be prevented from being moved when the power supply plug 99 remains inserted in the charging inlet 50.

Further, the indicator 61 opens and closes the charging inlet 50, and hence can also serve as a lid for the charging inlet 50. Further, the charging inlet 50 is arranged below the indicator 61. Thus, the charging inlet 50 can be less conspicuous. Further, the charging inlet 50 is arranged on the center portion of the steering handle 5. Thus, a driver can perform charging while getting on the vehicle.

### [Fourth non-claimed Reference Example]

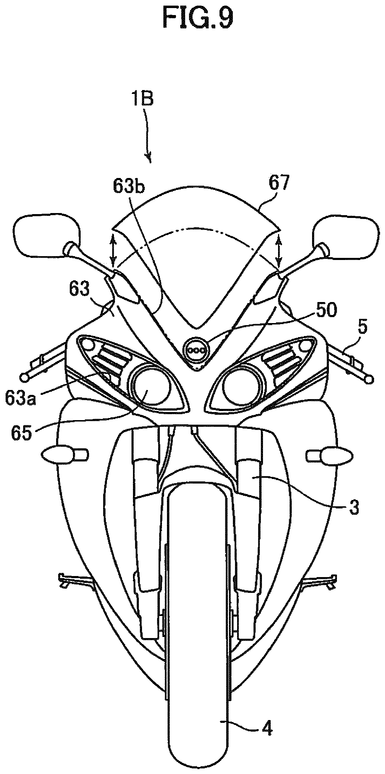

In a fourth non-claimed reference example illustrated in FIG. 9, the charging inlet 50 is arranged on an inner side of a windshield 67 of a movable type. An electric motorcycle 1B includes a cowl 63 configured to cover a front portion of the vehicle body. Openings 63a are formed in the cowl 63, and headlights 65 are arranged inside the openings 63a, respectively. Further, a V-shaped notch 63b is formed in an upper portion of the cowl 63, and the transparent windshield 67 is arranged on an inner side of the notch 63b.

The windshield 67 is provided so as to be capable of opening and closing the charging inlet 50. For example, the windshield 67 is configured to be slidable along the cowl 63 between an opening position and a closing position. Alternatively, the windshield 67 may be configured to be turnable such that a front lower portion of the windshield 67 is turned in the upward direction.

When the windshield 67 is at the closing position, the windshield 67 is at a position of covering the opening of the charging inlet 50, thereby restricting insertion of the power supply plug 99. The opening direction of the charging inlet 50 is directed in the forward direction. When the windshield 67 is at the closing position, a gap between the cowl 63 and the windshield 67 is closed, and the windshield 67 is integrated with the cowl 63.

When the windshield 67 is at the opening position, the windshield 67 is away from the opening of the charging inlet 50, thereby allowing insertion of the power supply plug 99. When the windshield 67 is at the opening position, the gap is formed between the cowl 63 and the windshield 67, and the charging inlet 50 emerges in the gap.

According to the fourth non-claimed reference example described above, the charging inlet 50 is arranged on the inner side of the windshield 67. Thus, the charging inlet 50 can be less conspicuous. Further, the opening direction of the charging inlet 50 is directed in the forward direction, with the result that the power supply plug 99 is inserted in the rearward direction. Thus, the stability of the posture of the vehicle body is easily ensured.

### [Fifth non-claimed Reference Example]

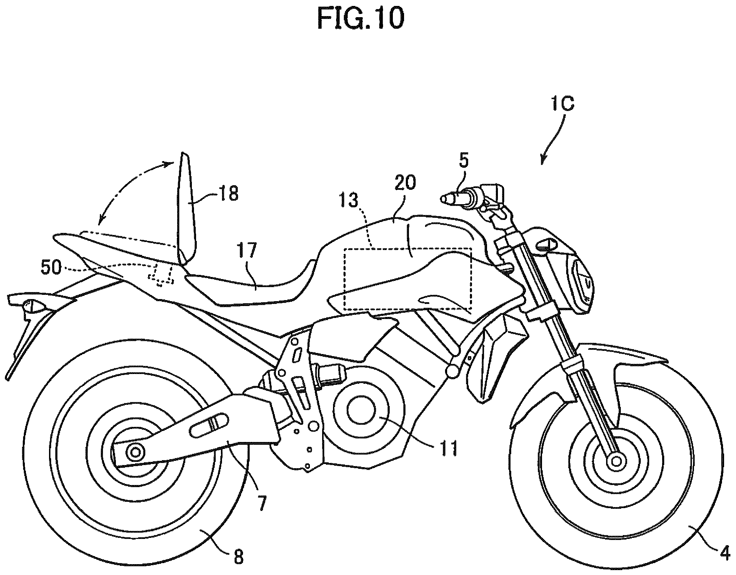

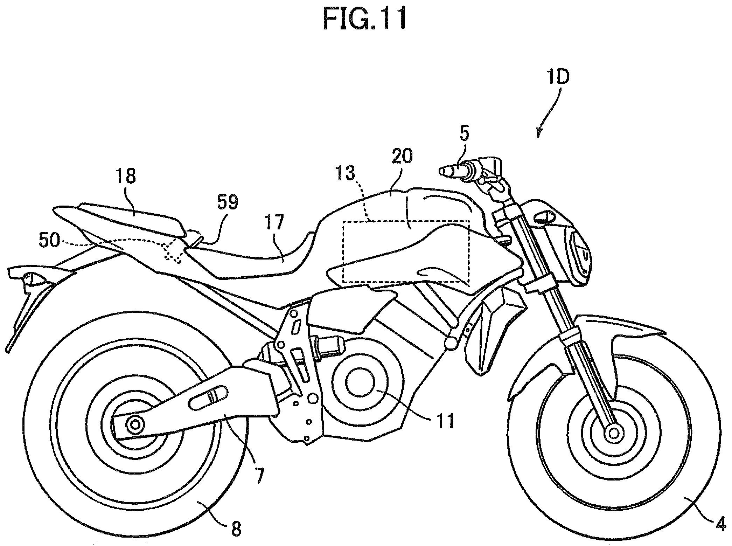

In a fifth non-claimed reference example illustrated in FIG. 10 and FIG. 11, the charging inlet 50 is arranged on a rear portion of the vehicle body. On the rear portion of the vehicle body, a tandem seat 18 for allowing a passenger to sit thereon in a straddling manner is provided behind the seat 17 for allowing a driver to sit thereon in a straddling manner. The tandem seat 18 is arranged at a position higher than the seat 17, and a step is formed between the seat 17 and the tandem seat 18.

In a non-claimed example illustrated in FIG. 10, the tandem seat 18 is provided so as to be openable and closable, and the charging inlet 50 is arranged below the tandem seat 18. That is, the tandem seat 18 is provided so as to be capable of opening and closing the charging inlet 50.

When the tandem seat 18 is at a closing position, the tandem seat 18 is at a position of covering the opening of the charging inlet 50, thereby restricting insertion of the power supply plug 99. The opening direction of the charging inlet 50 is directed in the upward direction. When the tandem seat 18 is at the closing position, a passenger can sit on the tandem seat 18. When the tandem seat 18 is at an opening position, the tandem seat 18 is away from the opening of the charging inlet 50, thereby allowing insertion of the power supply plug 99.

In a non-claimed example illustrated in FIG. 11, the charging inlet 50 is arranged below the tandem seat 18, and the insertion port of the charging inlet 50 is arranged in the step formed between the seat 17 and the tandem seat 18. The insertion port of the charging inlet 50 is directed in a forward and upward direction. Further, the inlet lid 59 configured to open and close the charging inlet 50 is provided on the charging inlet 50.

According to the fifth non-claimed reference example described above, the charging inlet 50 is arranged below the tandem seat 18. Thus, the charging inlet 50 can be less conspicuous. Further, the power supply plug 99 is inserted in the downward direction into the charging inlet 50 provided on the rear portion of the vehicle body. Thus, the stability of the posture of the vehicle body is easily ensured. Further, in the non-claimed example illustrated in FIG. 10, the tandem seat 18 can also serve as the lid for the charging inlet 50.

## Claims

1. An electric motorcycle, comprising:
a front wheel (4);
a rear wheel (8);
an electric motor (11), which is configured to drive at least one of the front wheel (4) and the rear wheel (8);
a battery (13), which is configured to store electric power to be supplied to the electric motor (11);
a side stand (29), which is positioned on a first side with respect to a center of a vehicle body in a vehicle width direction;
a steering handle (5);
a seat (17) for allowing a driver to sit thereon in a straddling manner;
an exterior cover (20), which is provided between the steering handle (5) and the seat (17); and
a charging inlet (50), which is electrically connected to the battery (13), and has an insertion port (50a) into which a power supply plug (99) is to be inserted, the insertion port (50a) being arranged in a portion of the exterior cover (20), wherein a triangle is formed by connecting a ground contact point (G1) of the front wheel (4), a ground contact point (G2) of the rear wheel (8), and a ground contact point (G3) of the side stand (29), **characterized in that** the insertion port (50a) is arranged in the portion of the exterior cover (20) on a second side that is opposite, with respect to the center of the vehicle body in the vehicle width direction, to the first side, and
an extension line (EX) of a direction of inserting the power supply plug (99) into the charging inlet (50), which is given when the side stand (29) supports the vehicle body, passes a region within the triangle formed by connecting the ground contact point (G1) of the front wheel (4), the ground contact point (G2) of the rear wheel (8), and the ground contact point (G3) of the side stand (29).

2. The electric motorcycle according to claim 1, **characterized in that,** when the side stand (29) supports the vehicle body, the insertion port (50a) of the charging inlet (50) is directed in an upward direction with respect to a horizontal direction.

3. The electric motorcycle according to claim 1 or 2, **characterized in that** the charging inlet (50) is arranged in a portion of the exterior cover (20) that is directed in an upward direction and a second direction directed from the center of the vehicle body in the vehicle width direction toward the second side.

4. The electric motorcycle according to claim 3, **characterized in that** the battery (13) includes a first battery cell (13a), and a second battery cell (13b) that is arranged, with respect to the first battery cell (13a), in the second direction directed from the center of the vehicle body in the vehicle width direction toward the second side, and is arranged so that an upper surface of the second battery cell (13b) is lower than an upper surface of the first battery cell (13a), and
wherein at least a part of the charging inlet (50) is arranged in a space (21a) formed above the second battery cell (13b) and in the second direction with respect to the first battery cell (13a).

5. The electric motorcycle according to any one of claims 1 to 4, **characterized in that** the battery (13) is arranged inside the exterior cover (20).

6. The electric motorcycle according to any one of claims 1 to 5, **characterized by** an inlet lid (59) capable of opening and closing the charging inlet (50).

7. The electric motorcycle according to any one of claims 1 to 6, **characterized in that** the charging inlet (50) is arranged in the exterior cover (20) at a position at which insertion and removal of the power supply plug (99) is disabled when the steering handle (5) is at a center position, and at which insertion and removal of the power supply plug (99) is enabled when the steering handle (5) is turned by a predetermined angle or more from the center position in a first direction directed from the center of the vehicle body in the vehicle width direction toward the first side.

## Patentansprüche

1. Ein Elektro-Motorrad, das umfasst:
ein Vorder-Rad (4);
ein Hinter-Rad (8);
einen Elektro-Motor (11), der konfiguriert ist, um zumindest eines von dem Vorder-Rad (4) und dem Hinter-Rad (8) anzutreiben;
eine Batterie (13), die konfiguriert ist, um elektrische Leistung, die zu dem Elektro-Motor (11) zuzuführen ist, zu speichern;
einen Seiten-Ständer (29), der an einer ersten Seite mit Bezug auf eine Mitte von einem Fahrzeug-Körper in einer Fahrzeug-Breiten-Richtung positioniert ist;
eine Lenk-Stange (5);
einen Sitz (17), um einen Fahrer zu gestatten, in einer Spreiz-Sitz-Weise darauf zu sitzen;
eine Außen-Abdeckung (20, die zwischen der Lenk-Stange (5) und dem Sitz (17) vorgesehen ist; und
einen Lade-Einlass (50), der elektrisch mit der Batterie verbunden ist und einen Einsetz-Anschluss (50a) hat, in den ein Leistungszufuhr-Stecker (99) einzusetzen ist, der Einsetz-Anschluss (50a) ist in einem Abschnitt von der Außen-Abdeckung (20) angeordnet, wobei ein Dreieck durch Verbinden eines Boden-Kontakt-Punkts (G1) von dem Vorder-Rad (4), eines Boden-Kontakt-Punkts (G2) von dem Hinter-Rad (8), und eines Boden-Kontakt-Punkts (G3) von dem Seiten-Ständer (29) gebildet ist,
**dadurch gekennzeichnet, dass** der Einsetz-Anschluss (50a) in einem Abschnitt von der Außen-Abdeckung (20) an einer zweiten Seite, die, mit Bezug auf die Mitte von dem Fahrzeug-Körper in der Fahrzeug-Breiten-Richtung, gegenüber zu der ersten Seite ist, angeordnet ist, und
eine Erstreckungs-Linie (EX) von einer Richtung des Einsetzens des Leistungszufuhr-Steckers (99) in den Lade-Einlass (50), die gegeben ist, wenn der Seiten-Ständer (29) den Fahrzeug-Körper lagert, tritt durch einen Bereich innerhalb des Dreiecks, gebildet durch Verbindung des Boden-Kontakt-Punkts (G1) von dem Vorder-Rad (4), des Boden-Kontakt-Punkts (G2) von dem Hinter-Rad (8), und des Boden-Kontakt-Punkts (G3) von dem Seiten-Ständer (29), hindurch.

2. Das Elektro-Motorrad gemäß zu Anspruch 1, **dadurch gekennzeichnet, dass,** wenn der Seiten-Ständer (29) den Fahrzeug-Körper lagert, ist der Einsetz-Anschluss (50a) von dem Lade-Einlass (50) in eine Oben-Richtung mit Bezug auf eine HorizontalRichtung gerichtet.

3. Das Elektro-Motorrad gemäß zu Anspruch 1 oder 2, **dadurch gekennzeichnet, dass** der Lade-Einlass (50) in einem Abschnitt von der Außen-Abdeckung (20), der in eine Oben-Richtung und eine zweite Richtung gerichtet ist, die von der Mitte von dem Fahrzeug-Körper in der Fahrzeug-Breiten-Richtung zu der zweiten Seite gerichtet ist, angeordnet ist.

4. Das Elektro-Motorrad gemäß zu Anspruch 3, **dadurch gekennzeichnet, dass** die Batterie (13) eine erste Batterie-Zelle (13a) beinhaltet, und eine zweite Batterie-Zelle (13b) ist, mit Bezug auf die erste Batterie-Zelle (13a), in der zweiten Richtung anageordnet, die von der Mitte von dem Fahrzeug-Körper in der Fahrzeug-Breiten-Richtung zu der zweiten Seite gerichtet ist, und ist angeordnet, so dass eine obere Fläche von der zweiten Batterie-Zelle (13b) niedriger ist als eine obere Fläche von der ersten Batterie-Zelle (13a), und
wobei zumindest ein Teil von dem Lade-Einlass (50) in einem Raum (21a) angeordnet ist, der oberhalb der zweiten Batterie-Zelle (13b) und in der zweiten Richtung, mit Bezug auf die erste Batterie-Zelle (13a), ausgebildet ist.

5. Das Elektro-Motorrad gemäß zu irgendeinem der Ansprüche 1 bis 4, **dadurch gekennzeichnet, dass** die Batterie innerhalb der Außen-Abdeckung (20) angeordnet ist.

6. Das Elektro-Motorrad gemäß zu irgendeinem der Ansprüche 1 bis 5, **gekennzeichnet durch** einen Einlass-Deckel (59), der in der Lage ist, den Lade-Einlass (50) zu öffnen und zu verschließen.

7. Das Elektro-Motorrad gemäß zu irgendeinem der Ansprüche 1 bis 6, **dadurch gekennzeichnet, dass** der Lade-Einlass (50) in der Außen-Abdeckung (20) an einer Position, an der Einsetzen und Entfernen von dem Leistungszufuhr-Stecker (99) verhindert ist, wenn die Lenk-Stange (5) an einer Mitten-Position ist, und in der Einsetzen und Entfernen von dem Leistungszufuhr-Stecker (99) ermöglicht ist, wenn die Lenk-Stange (5) um einen vorgegebenen Winkel oder mehr von der Mitten-Position in einer ersten Richtung, die von der Mitte von dem Fahrzeug-Körper in die Breiten-Richtung gerichtet ist, zu der ersten Seiten gedreht ist, angeordnet ist.

## Revendications

1. Motocyclette électrique, comprenant:
une roue avant (4);
une roue arrière (8);
un moteur électrique (11), qui est configuré pour entraîner au moins l'une des roues avant (4) et arrière (8);
une batterie (13), qui est configurée pour stocker l'énergie électrique à fournir au moteur électrique (11);
une béquille latérale (29), qui est positionnée sur un premier côté par rapport au centre de la carrosserie d'un véhicule dans le sens de la largeur du véhicule;
une poignée de direction (5);
un siège (17) pour permettre au conducteur de le chevaucher;
une couverture extérieure (20), qui est prévue entre la poignée de direction (5) et le siège (17); et
une entrée de charge (50), qui est reliée électriquement à la batterie (13), et comporte un orifice d'insertion (50a) dans lequel une fiche d'alimentation électrique (99) doit être insérée, l'orifice d'insertion (50a) étant disposé dans une partie du couvercle extérieur (20), dans lequel un triangle est formé en reliant un point de contact au sol (G1) de la roue avant (4), un point de contact au sol (G2) de la roue arrière (8), et un point de contact au sol (G3) de la béquille latérale (29), **caractérisé en ce que** l'orifice d'insertion (50a) est disposé dans la partie du couvercle extérieur (20) sur un deuxième côté qui est opposé, par rapport au centre de la carrosserie du véhicule dans le sens de la largeur du véhicule, au premier côté, et
une ligne de prolongement (EX) d'une direction d'insertion de la fiche d'alimentation électrique (99) dans l'entrée de chargement (50), qui est donnée lorsque la béquille latérale (29) supporte la carrosserie du véhicule, passe par une zone à l'intérieur du triangle formé en reliant le point de contact au sol (G1) de la roue avant (4), le point de contact au sol (G2) de la roue arrière (8) et le point de contact au sol (G3) de la béquille latérale (29).

2. Motocyclette électrique selon la revendication 1, **caractérisée en ce que**, lorsque la béquille latérale (29) supporte la carrosserie du véhicule, l'orifice d'insertion (50a) de l'entrée de charge (50) est dirigé vers le haut par rapport à une direction horizontale.

3. Motocyclette électrique selon les revendications 1 ou 2, **caractérisée en ce que** l'entrée de charge (50) est disposée dans une partie du couvercle extérieur (20) qui est dirigée dans une direction vers le haut et dans une seconde direction dirigée du centre de la carrosserie du véhicule dans le sens de la largeur du véhicule vers le second côté.

4. Motocyclette électrique selon la revendication 3, **caractérisée en ce que** la batterie (13) comprend une première cellule de batterie (13a) et une deuxième cellule de batterie (13b) qui est disposée, par rapport à la première cellule de batterie (13a), dans la deuxième direction dirigée du centre de la carrosserie du véhicule dans le sens de la largeur du véhicule vers le deuxième côté, et est disposée de sorte qu'une surface supérieure de la deuxième cellule de batterie (13b) est inférieure à une surface supérieure de la première cellule de batterie (13a), et
dans lequel au moins une partie de l'entrée de charge (50) est disposée dans un espace (21a) formé au-dessus de la deuxième cellule de batterie (13b) et dans la deuxième direction par rapport à la première cellule de batterie (13a).

5. Motocyclette électrique selon l'une quelconque des revendications 1 à 4. **caractérisé en ce que** la batterie (13) est disposée à l'intérieur du couvercle extérieur (20).

6. Motocyclette électrique selon l'une quelconque des revendications 1 à 5, **caractérisé par** un couvercle d'entrée (59) capable d'ouvrir et de fermer l'entrée de charge (50).

7. Motocyclette électrique selon l'une quelconque des revendications 1 à 6, **caractérisée en ce que** l'entrée de charge (50) est disposée dans le couvercle extérieur (20) à une position à laquelle l'insertion et le retrait de la fiche d'alimentation électrique (99) sont désactivés lorsque le guidon de direction (5) est en position centrale, et à laquelle l'insertion et le retrait de la fiche d'alimentation électrique (99) sont activés lorsque le guidon de direction (5) est tourné d'un angle prédéterminé ou plus à partir de la position centrale dans une première direction dirigée du centre de la carrosserie du véhicule dans le sens de la largeur du véhicule vers le premier côté.
